# EUROPEAN PATENT SPECIFICATION

(11) **EP 1 752 785 B1**
(45) Date of publication and mention of the grant of the patent: **01.05.2013**
(21) Application number: 06014588.5
(22) Date of filing: 13.07.2006
(51) Int. Cl.: G01C 21/28, G01S 19/24, G01S 19/52, G01S 19/40

(54) **Terminal device for position calculation based on satellite signals and corresponding control method and program**
Endgerät zur Positionsermittlung mit Hilfe von Satellitensignalen sowie entsprechendes Steuerverfahren und -programm
Dispositif terminal de calcul de la position à l'aide de signaux émis par des satellites ainsi que procédé et programme de commande correspondantes

(30) Priority: 14.07.2005 JP 2005205488
(43) Date of publication of application: 14.02.2007
(73) Proprietor: Seiko Epson Corporation, Tokyo 163-0811 (JP)
(72) Inventor: Mizuochi, Shunichi, Suwa-shi, Nagano-ken 392-8502 (JP); Kurata, Tomoyuki, Suwa-shi, Nagano-ken 392-8502 (JP)
(74) Representative: HOFFMANN EITLE

(56) References cited:
- JP-A- 8 068 651
- US-A1- 2005 055 160

## Description

### BACKGROUND

### 1. Technical Field

The present invention relates to a terminal device which uses signals from positioning satellites, a terminal device control method, and a terminal device control program.

### 2. Related Art

In the past, there has been a practically available positioning system for positioning a current position of a GPS receiver by utilizing a GPS (Global Positioning System), for example, that is a satellite navigation system.

The GPS receiver receives signals (hereinafter, referred to as satellite signals) from a plurality of GPS satellites, and obtains a distance (hereinafter, referred to a pseudo distance) between each of the GPS satellites and the GPS receiver in accordance with a phase of the received signals. Then, positioning calculation of a current position is carried out by using satellite orbit information of each of the GPS satellites, the information being loaded on the satellite signals received from each of the GPS satellites and the above-described pseudo distance.

However,discrepancy occurs with positioning results for a reason, for example, that combinations of the GPS satellites used in positioning are not always identical to each other, and the GPS receiver may output a positioning result deviating from a true position.

In contrast, there is proposed a technique of calculating a current estimated position from a previous positioning result, a speed vector (including those obtained by averaging the previous speed vector and the current speed vector) and an elapsed time, and then, averaging a current positioning result and the estimated position (JP A-8-68651 (FIG. 4 or the like), for example).

However, in the above described technique the precision of a speed vector is worsened depending on a receiving state of satellite signals. As a result, there is a problem that an estimated position deviates from a true position, and an averaged position also deviates from the true position.

### SUMMARY

Therefore, an advantage of some aspects of the invention is to provide a terminal device capable of calculating an estimated position with high precision, a terminal device control method, and a terminal device control program.

According to a first aspect of the invention, the advantage is attained by a terminal device for carrying out position calculating processing for generating current position information indicating a current position for outputting by performing weighted average processing on positioning position information generated based on satellite signals that are signals from positioning satellites and estimated position information indicating an estimated position, the terminal device comprising: satellite signal receiving means for receiving the satellite signals; positioning position information generating means for generating the positioning position information indicating a current position of the terminal device, based on the satellite signals; speed vector information generating means for generating speed vector information indicating a passing direction and a passing speed of the terminal device, based on the satellite signals; receiving condition information generating means for generating receiving condition information indicating a receiving condition of the satellite signals obtained when the speed vector information was generated; speed vector reliability information generating means for generating speed vector reliability information indicating reliability of the speed vector information, based on the receiving condition information; corrected speed vector information generating means for correcting the speed vector information and generating corrected speed vector information, based on the speedvector reliability information; average speed vector information generating means for generating average speed vector information by averaging the corrected speed vector information and the corrected speed vector information in the previous position calculating processing; estimated position information generating means for generating the estimated position information indicating an estimated position of the terminal device, based on the average speed vector information and the current position information output in the previous position calculating processing; current position information generating means for generating the current position information by performing the weighted average processing on the estimated positioninformation and the positioning position information; and current position information output means for outputting the current position information.

With a configuration according to the first aspect of the invention, the terminal device has the receiving condition information generating means, and thus, can generate the receiving condition information. In addition, the terminal device has the speed vector reliability information generating means, and thus, can generate the speed vector reliability information, based on the receiving condition information. The terminal device can generate the speed vector reliability information indicating that reliability of the speed vector information is low in the case where the receiving condition indicated in the receiving condition information is worse than a predetermined criterion value, for example.

In addition, the terminal device can generate the corrected vector reliability information by correcting the speed vector information, based on the speed vector reliability information. This corrected speed vector information is generated by correcting the speed vector information, and thus, reflects a true passing state of the terminal device more correctly as compared with the uncorrected speed vector information. Then, the terminal device generates the average speed vector information by using the corrected speed vector information, and further, can generate the estimated position information.

In this manner, the terminal device can calculate the estimated position with high precision.

According to a second aspect of the invention, in the configuration of the first aspect of the invention, there is provided a terminal device, wherein the corrected speed vector information generating means is configured to correct the speed vector information in the current position calculating processing, and generate the corrected speed vector information, based on the speed vector reliability information, previous speed vector reliability information indicating reliability of the speed vector obtained when the previous position calculating processing was carried out, and the corrected speed vector information obtained when the previous position calculating processing was carried out.

With a configuration according to the second aspect of the invention, the terminal device can generate the corrected speed vector information while reducing a proportion of the current speed vector information in the case where reliability of the speed vector information indicated in the speed vector reliability information is low. The corrected speed vector information is generated by reducing a proportion of the current speed vector information with low reliability, and thus, a true passing state of the terminal device is reflected more correctly as compared with the uncorrected speed vector information.

In addition, the terminal device generates the average speed vector information by using the corrected speed vector information, and further, can generate the estimated position information.

In this manner, the terminal device can calculate the estimated position with high precision.

According to a third aspect of the invention, in a configuration according to either of the first and second aspects of the invention, there is provided a terminal device, wherein the speed vector information generating means is configured to generate a plurality of the speed vector information, based on the satellite signals from a set of the positioning satellites which are different from each other and has speed vector information selecting means for selecting any of the speed vector information, based on the speed vector reliability information; and wherein the corrected speed vector information generating means is configured to generate the corrected speed vector information by using the speed vector information selected by the speed vector information selecting means.

With a configuration according to the third aspect of the invention, the terminal device has the speed vector information selecting means, and can select the speed vector information having relatively large reliability.

In addition, the corrected speed vector information generating means is configured to generate the corrected speed vector information by using the speed vector information selected by the speed vector information selecting means, and thus, can generate the corrected speed vector information, based on the speed vector information having relatively precisely reflected a true passing state of the terminal device.

Therefore, the corrected speed vector information reflects a true passing state of the terminal device more correctly.

In this manner, the terminal device can calculate the estimated position with higher precision.

According to a fourth aspect of the invention, in a configuration according to any one of the first to third aspect of the invention, there is provided a terminal device, wherein the receiving condition information includes elapsed time information indicating an elapsed time required for the satellite signal receiving means to receive the satellite signals, and then, generate the speed vector information.

If the elapsed time is longer, the terminal device has generated the speed vector information based on the older satellite signals. It is also considered that the passing state of the terminal device indicated in the speed vector information generated based on the older satellite signals deviates from the true present passing state of the terminal device.

In this regard, according to the fourth aspect of the invention, since the receiving condition information includes the elapsed time information, the terminal device lowers the reliability of the speed vector information when the elapsed time is longer than a reference time, for example, and can generate the corrected speed vector information while lightening the weight of the speed vector information.

Therefore, the corrected speed vector information reflects the true passing state of the terminal device more correctly.

Accordingly, the estimated position can be calculated with high precision even in the case where the elapsed time is long.

According to a fifth aspect of the invention, in a configuration according to any of the first to fourth aspects of the invention, there is provided a terminal device, wherein the receiving condition information includes signal strength information indicating signal strength obtained when the satellite signals used to generate the speed vector information were received.

It is considered that a passing state of the terminal device indicated in the speed vector information based on the satellite signals whose strength are weak, deviates from a true passing state of the terminal device.

In this regard, with the configuration according to the fifth aspect of the invention, the receiving condition information includes signal strength information indicating receiving strength obtained when the satellite signals used to generate the speed vector information were received. Thus, the terminal device can generate the speed vector reliability information indicating that reliability of the speed vector information is low in the case where the signal strength is weaker than a criterion value.

In addition, the terminal device can generate the corrected speed vector information while reducing weight of the speed vector information.

Thus, the corrected speed vector information reflects a true passing state of the terminal device more correctly.

In this manner, even in the case where the signal strength is weak, the estimated position can be calculated with high precision.

According to a sixth aspect of the invention, in a configuration according to any of the first to fifth aspects of the invention, there is provided a terminal device, wherein the receiving condition information includes elevation information indicating an elevation of the positioning satellite that transmitted the satellite signals used to generate the speed vector information and PDOP information indicating PDOP (Position Dilution Of Precision) of a set of the positioning satellites that transmitted the satellite signals used to generate the speed vector information.

It is considered that a passing state of the terminal device deviates from a true passing state of the terminal device, the passing state being indicated in the speed vector information generated based on the satellite signals from the positioning satellites, the elevation of which are low, or the satellite signals from a set of the positioning satellites, the PDOP of which is great.

In this regard, with a configuration according to the sixth aspect of the invention, the receiving condition information includes the elevation information and the PDOP information. Thus, the terminal device can generate the speed vector reliability information indicating that reliability of the speed vector information is low in the case where the elevation is lower than a criterion value or in the case where the PDOP is greater than a criterion value.

In addition, the terminal device can generate the corrected speed vector information while reducing weight of the speed vector information.

Thus, the corrected speed vector information reflects a true passing state of the terminal device more correctly.

In this manner, even in the case where the elevation is small or in the case where the PDOP is great, the estimated position can be calculated with high precision.

According to a seventh aspect of the invention, the advantage is attained by a terminal device control method comprising the steps of: receiving satellite signals by means of a terminal device which carries out position calculating processing for generating current position information indicating a current position for outputting by performing weighted average processing on positioning position information generated based on the satellite signals that are signals from positioning satellites and estimated position information indicating an estimated position; generating the positioning position information indicating a current position of the terminal device based on the satellite signals by means of the terminal device; generating speed vector information indicating a passing direction and a passing speed of the terminal device, based on the satellite signals by means of the terminal device; generating receiving condition information indicating a receiving condition of the satellite signals obtained when the speed vector information was generated, by means of the terminal device; generating speed vector reliability information indicating reliability of the speed vector information, based on the receiving condition information, by means of the terminal device; generating corrected speed vector information by correcting the speed vector information , based on the speed vector reliability information, bymeans of the terminal device; generating average speed vector information by averaging the corrected speed vector information and the corrected speed vector information in the previous position calculating processing, by means of the terminal device; generating the estimated position information indicating an estimated position of the terminal device, based on the average speed vector information and the current position information output in the previous position calculating processing by means of the terminal device; generating the current position information by performing the weighted average processing on the estimated position information and the positioning position information by means of the terminal device; and outputting the current position information bymeans of the terminal device.

According to an eighth aspect of the invention, the advantage is attained by a terminal device control program causing a computer to execute the steps of: receiving satellite signals by means of a terminal device which carries out position calculating processing for generating current position information indicating a current position for outputting by performing weighted average processing on positioning position information generated based on the satellite signals that are signals from positioning satellites and estimated position information indicating an estimated position; generating the positioning position information indicating a current position of the terminal device based on the satellite signals by means of the terminal device; generating speed vector information indicating a passing direction and a passing speed of the terminal device, based on the satellite signals by means of the terminal device; generating receiving condition information indicating a receiving condition of the satellite signals obtained when the speed vector information was generated, by means of the terminal device; generating speed vector reliability information indicating reliability of the speed vector information, based on the receiving condition information by means of the terminal device; generating corrected speed vector information by correcting the speed vector information, based on the speed vector reliability information by means of the terminal device; generating average speed vector information by averaging the corrected speed vector information and the corrected speed vector information in the previous position calculating processing by means of the terminal device; generating the estimated position information indicating an estimated position of the terminal device, based on the average speed vector information and the current position information output in the previous position calculating processing by means of the terminal device; generating the current position information by performing the weighted average processing on the estimated position information and the positioning position information by means of the terminal device; and outputting the current position information bymeans of the terminal device.

### BRIEF DESCRIPTION OF THE DRAWINGS

The invention will be described with reference to the accompanying drawings, wherein like numbers reference like elements.

FIG. 1 is a schematic diagram showing a terminal or the like according to an embodiment of the invention;

FIG. 2 is a schematic diagram showing a primary hardware configuration of the terminal;

FIG. 3 is a schematic diagram showing a primary software configuration of the terminal;

FIG. 4A and 4B are illustrative diagrams illustrating a speed reliability information generating program;

FIG. 5 is an illustrative diagram illustrating a speed vector correcting purpose gain deciding program;

FIG. 6A and 6B are illustrative diagrams illustrating a speed vector correcting program;

FIG. 7 is a diagram showing an example of an average speed vector or the like;

FIG. 8 is a schematic flow chart showing an example of an operation of the terminal;

FIG. 9 is a schematic flow chart showing an example of an operation of the terminal;

FIG. 10A and 10B are diagrams sowing a comparative example of a related technique and the present embodiment;

FIG. 11 is a schematic diagram showing a primary software configuration of the terminal; and

FIG. 12A, 12B and 12C are diagrams showing an example of a positioning position information or the like.

### DESCRIPTION OF EXEMPLARY EMBODIMENTS

Hereinafter, with reference to the drawings, the exemplary embodiment(s) of this invention will be described in detail.

The following embodiments are given various limitations that are preferable technically because they are the exemplary specific examples of the invention; however, the scope of the invention is not limited to these aspects unless there is a particular description to limit the invention in the following descriptions.

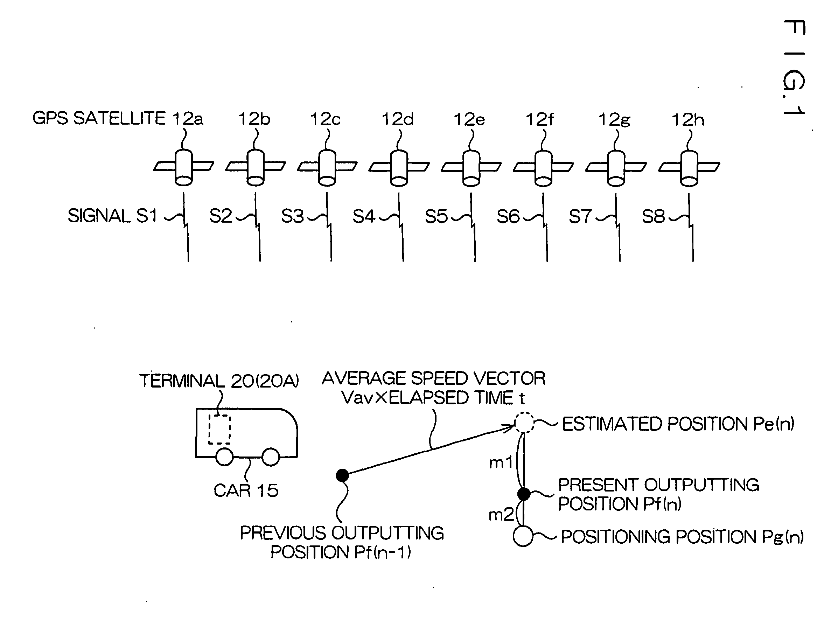

FIG. 1 is a schematic diagram showing a terminal 20 or the like according to an embodiment of the invention. The terminal 20 is an example of a terminal device.

The terminal 20 can receive, for example, signals S1, S2, S3, S4, S5, S6, S7, and S8 that are signals from GPS satellites 12a, 12b, 12c, 12d, 12e, 12f, 12g, and 12h which are positioning satellites. This signal S1 or the like are examples of satellite signals.

The terminal 20 is mounted on a vehicle 15, and moves.

The terminal 20 can carry out position calculating processing for generating information indicating a current output position Pf(n) that indicates a current position by performing weighted average processing on information indicating a positioning position Pg(n) in a current time generated based on a signal S1 or the like and a current estimated position Pe(n). Specifically, the terminal 20 determines as the current output position Pf(n) a position indicating that a distance from the estimated position Pe(n) and a distance from the positioning position Pg(n) are ml to m2. The information indicating the positioning position Pg(n) is an example of positioning position information. In addition, the information indicating the estimated position Pe(n) is an example of estimated position information.

The terminal 20 calculates the estimated position Pe (n) based on a previous output position Pf (n-1) and an average speed vector Vav which indicates a passing speed and a passing direction of the terminal 20, and an elapsed time "t." The above-described elapsed time "t" is a time between a time when the current output position Pf (n) is calculated and a time when the previous output position Pf(n-1) is calculated. The average speed vector Vav is generated by averaging a speed vector at the time of the previous position calculating processing and a speed vector in the current position calculating processing in a passing direction and a passing speed. Between the previous position calculating processing and the current position calculating processing, the passing direction and passing speed of the terminal 20 cannot be recognized. Thus, in the previous and current position calculating processing operations, the estimated position Pe (n) is calculated assuming that the passing direction and passing speed of the terminal 20 are a passing direction and a passing speed on average of speed vectors calculated in the previous and current position calculating processing operations.

Here, in the case where the average speed vector Vav deviates from a true passing state of the terminal 20, the estimated position Pe (n) deviates from a true position of the terminal 20 in a current time. As a result, the current output position Pf(n) also deviates from the true position of the terminal 20.

The terminal 20 can improve precision of the average speed vector Vav and improve the precision of the estimated position Pe(n) with a configuration described below. As a result, the terminal 20 can improve the precision of the current output position Pf(n).

In the present specification, a phrase "high precision" means that deviation from a true position or passing state of the terminal 20 is small.

Although the terminal 20 is a car navigation device, for example, the terminal may be a potable cellular phone, PHS (Personal Handy-phone System), PDA (Personal Digital Assistance) or the like, but is not limited thereto.

Unlike the present embodiment, the number of GPS satellites 12 and the like is not limited to eight, but may be three or more and seven or less, or may be nine or more, for example.

### Primary Hardware Configuration of Terminal 20

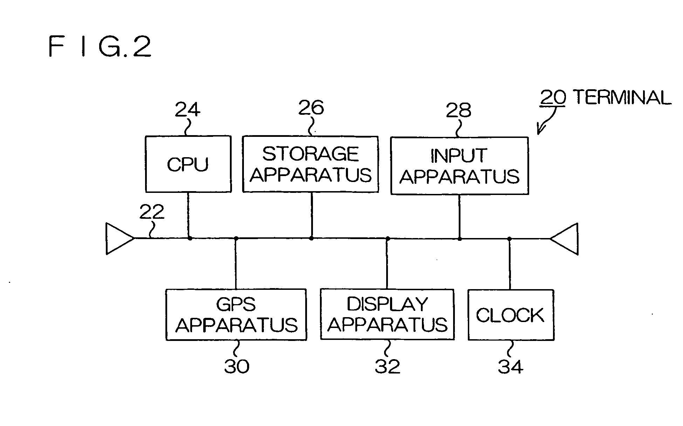

FIG. 2 is a schematic diagram showing a primary hardware configuration of the terminal 20.

As shown in FIG. 2, the terminal 20 has a computer, and the computer has a bus 22.

CPU (Central Processing Unit) 24 and a storage apparatus 26 or the like are connected to this bus 22. The storage apparatus 26 is RAM (Random Access Memory) or a ROM (Read Only Memory) and the like, for example.

An input apparatus 28 for inputting a variety of information or the like and a GPS apparatus 30 for receiving a signal S1 or the like from a GPS satellite 12a or the like are connected to this bus 22. This GPS apparatus 30 is an example of satellite signal receiving means.

In addition, a display device 32 for displaying a variety of information and a clock 34 for clocking a time and a time interval are connected to this bus 22.

### Primary Software Configuration of Terminal 20

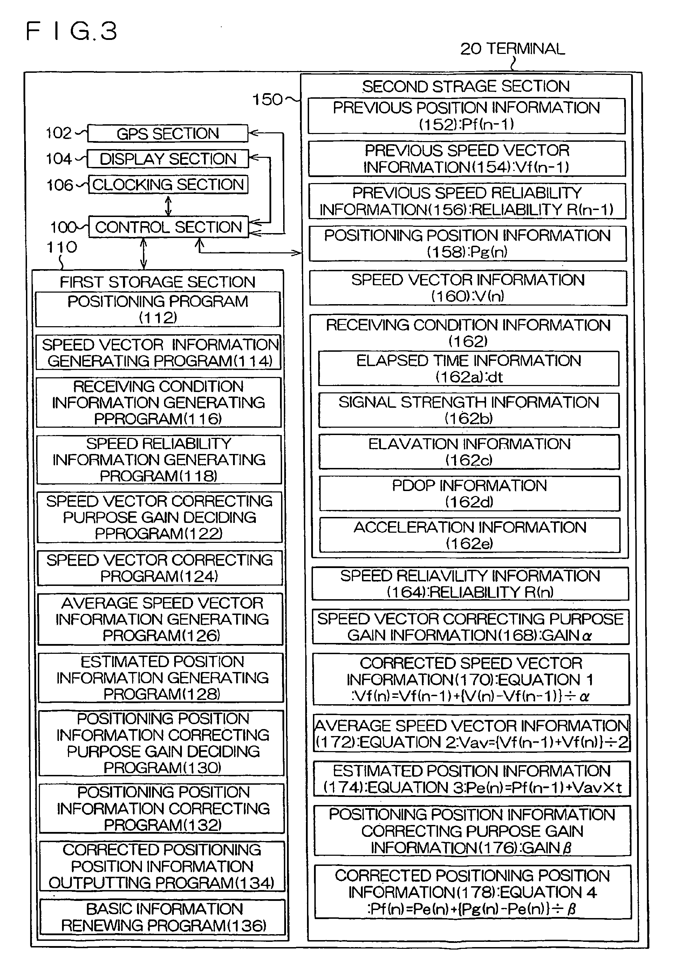

FIG. 3 is a schematic diagram showing a primary software configuration of the terminal 20.

As shown in FIG. 3, the terminal 20 has: a control section 100 for controlling each section; a GPS section 102 that corresponds to the GPS apparatus 30 shown in FIG. 2; a display section 104 that corresponds to the display device 32; and a clock section 106 that corresponds to the clock 34; or the like.

The terminal 20 further has a first storage section 110 for storing a variety of programs and a second storage section 150 for storing a variety of information.

As shown in FIG. 3, the terminal 20 stores previous position information 152 in the second storage section 150. The previous position information 152 is information indicating a previous output position Pf(n-1) (refer to FIG. 1).

The terminal 20 further stores previous speed vector information 154 in the second storage section 150. The previous speed vector information 154 is information indicating a corrected speed vector Vf(n-1) used in the previous position calculating processing.

The terminal 20 further stores previous speed reliability information 156 in the second storage section 150. The previous speed reliability information 156 is information indicating reliability of speed vector information 160 described later, the information being generated in the previous position calculating processing, and is an example of the previous speed vector reliability information.

As shown in FIG. 3, the terminal 20 stores a positioning program 112 in the first storage section 110. The positioning program 112 is a program for a control section 100 to carry out positioning based on a signal S1 or the like received by the GPS section 102, calculate a positioning position Pg (n) indicating a current position of the terminal 20, and generate positioning position information 158 indicating a positioning position Pg(n). The positioning position information 158 is an example of positioning position information. In addition, the positioning program 112 and the control section 100 are, as a whole, an example of positioning position information generating means.

Specifically, the terminal 20 receives signals S1 or the like from four GPS satellites 12a or the like, for example, and obtains a pseudo distance that is a distance between each GPS satellite 12a or the like and the terminal 20, based on a phase of the signal S1 or the like. Then, the terminal 20 carries out positioning calculation of a current position by using information (Ephemeris) indicating a satellite orbit of each GPS satellite 12a or the like and the above-described pseudo distance.

The control section 100 stores the generated positioning position information 158 in the second storage section 150.

This positioning position information 158 includes a positioning error based on a receiving condition or the like of the signal S1 or the like. The terminal 20 does not output the positioning position information 158 as it is to the outside.

As shown in FIG. 3, the terminal 20 stores a speed vector information generating program 114 in the first storage section 110. The speed vector information generating program 114 is a program for the control section 100 to calculate a speed vector V (n) indicating a passing direction and a passing speed of the terminal 20, based on the signal S1 or the like, and generate speed vector information 160 indicating a speed vector V(n). The speed vector information 160 is an example of speed vector information. In addition, the speed vector information generating program 114 and the control section 100 are, as a whole, an example of speed vector information generating means.

Specifically, the control section 100 generates speed vector information 160 based on a Doppler shift or the like of a plurality of signals S1 or the like received by the GPS section 102 (refer to paragraphs [0016] to [0018] of JP A-8-68651, for example).

The control section 100 stores speed vector information 160 indicating the generated speed vector V(n) in the second storage section 150.

As shown in FIG. 3, the terminal 20 stores a receiving condition information generating program 116 in the first storage section 110. The receiving condition information generating program 116 is a program for the control section 100 to generate receiving condition information 162 indicating a receiving condition of a signal S1 or the like obtained when speed vector information 160 was generated. The receiving condition information 162 is an example of receiving condition information. In addition, the receiving condition information generating program 116 and the control section 100 are, as a whole, an example of receiving condition information generating means.

The receiving condition information 162 includes, for example : elapsed time information 162a indicating an elapsed time dt; signal strength information 162b indicating signal strength; elevation information 162c indicating an elevation; PDOP information 162d indicating PDOP; and acceleration information 162e indicating acceleration.

The elapsed time dt indicated in the elapsed time information 162a is an elapsed time for the GPS section 102 to generate speed vector information 160 based on a signal S1 or the like after receiving the signal S1 or the like. This elapsed time information 162a is an example of elapsed time information.

Signal strength indicated in signal strength information 162b is signal strength obtained when a signal S1 or the like used to generate speed vector information 160 was received. The signal strength information 162b is an example of signal strength information.

An elevation indicated in elevation information 162c is an elevation of each GPS satellite 12a or the like having transmitted therefrom a signal S1 or the like used to generate speed vector information 160. This elevation information 162c is elevation information.

PDOP indicated in PDOP information 162d is PDOP of a set (hereinafter, referred to as a satellite set) of GPS satellites 12a or the like having transmitted therefrom a signal S1 or the like used to generate speed vector information 160. This PDOP information 162d is an example of PDOP information.

Acceleration indicated in acceleration information 162e is acceleration of the terminal 20. This acceleration is specifically a difference between a speed indicated by a speed vector Vf (n-1) indicated in the above-described previous speed vector information 154 and a speed indicated by the currently calculated speed vector V(n).

Unlike the present embodiment, the receiving condition information 162 may not be all of the elapsed time information 162a, the signal strength information 162b, the elevation information 162c, the PDOP information 162d, and the acceleration information 162e, and any one or plurality of these items of the information may not be provided.

As shown in FIG. 3, the terminal 20 stores a speed reliability information generating program 118 in the first storage section 110. The speed reliability information generating program 118 is a program for the control section 100 to calculate reliability R(n) indicating reliability of speed vector information 160 based on the receiving condition information 162, and then, generate speed reliability information 164 indicating reliability R(n). This speed reliability information 164 is an example of speed vector reliability information. In addition, the speed reliability information generating program 118 and the control section 100 are, as a whole, an example of speed vector reliability information generating means.

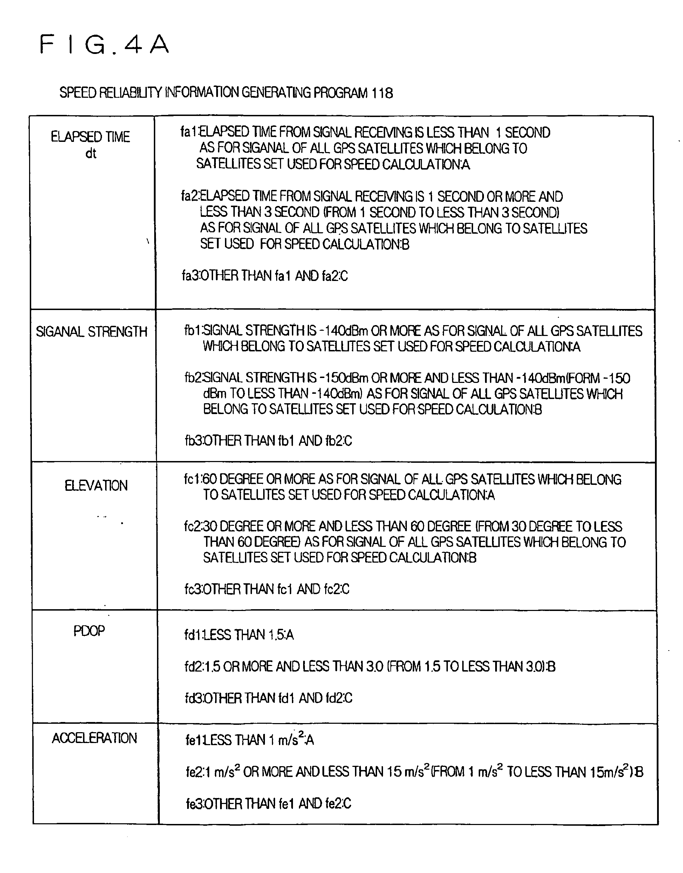

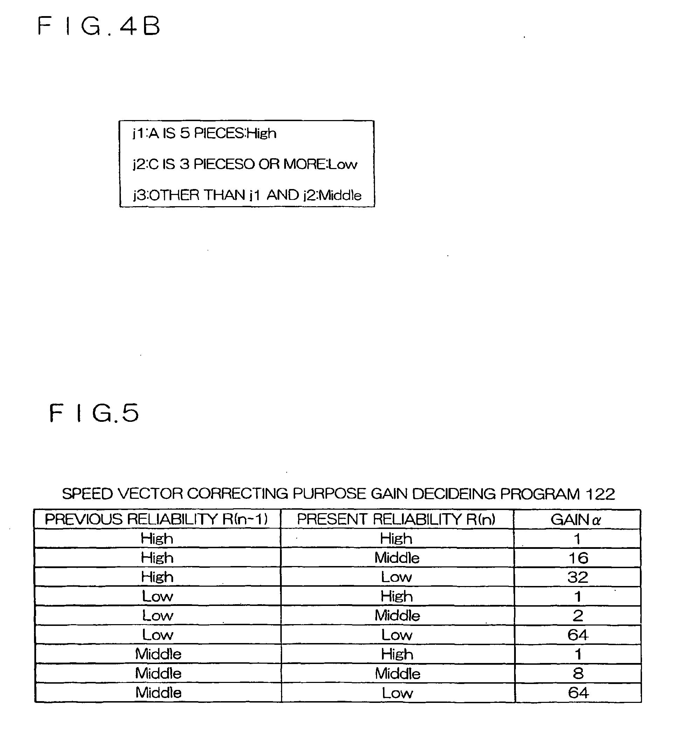

FIG. 4A and 4B are illustrative diagram s illustrating the speed reliability information generating program 118.

As shown in FIG. 4A, the control section 100 evaluates as "A" in the case where the elapsed time dt meets a condition fa1 that an elapsed time from signal receiving is less than 1 second(s) with respect to all signals S1 or the like of all the GPS satellites in a satellite set used for speed calculation (calculation of speed vector V(n)).

The control section 100 evaluates as "B" in the case where the elapsed time meets a condition fa2 that an elapsed time from signal receiving is 1 second (s) or more and less than 3 seconds with respect to signals S1 or the like of all the GPS satellites in a satellite set used for speed calculation.

Then, the control section 100 evaluates as "C" in the case where an elapsed time from signal receiving meets neither of the condition fa1 and the condition fa2 with respect to signals S1 or the like of all the GPS satellites in a satellite set used for speed calculation.

The control section 100 of the terminal 20 judges that an error is smaller in order of A, B, and C. That is, "A" denotes the smallest error, and "C" denotes the largest error.

As the elapsed time dt increases, an error of current speed calculation increases, and thus, the control section 100 makes judgment as described above.

In addition, the control section 100 evaluates as "A" in the case where signal strength meets a condition fb1 that the signal strength is -140 dBm or more with respect to signals S1 or the like of all the GPS satellites in a satellite set used for speed calculation.

The control section 100 evaluates as "B" in the case where signal strength meets a condition fb2 that it is -150 dBm or more and less than -140 dBm with respect to signals S1 or the like of all the GPS satellites in a satellite set used for speed calculation.

Then, the control section 100 evaluates as "C" in the case where signal strength meets neither of the condition fb1 and the condition fb2 with respect to signals S1 or the like of all the GPS satellites in a satellite set used for speed calculation.

As signal strength increases, a frequency (including Doppler effect) of a signal S1 or the like can be measured more correctly. As a result, a passing speed of the terminal 20 can also be correctly measured, and thus, the control section 100 makes judgment as described above.

In addition, as for elevation, the control section 100 evaluates as "A" in the case where an elevation meets a condition fc1 that all GPS satellites in a satellite set used for each speed calculation is 60 degrees or more.

The control section 100 evaluates as "B" in the case where an elevation angle meets a condition fc2 that all the GPS satellites in a satellite set used for each speed calculation is 30 degrees or more and less than 60 degrees.

In addition, the control section 100 evaluates as "C" in the case where an elevations of all the GPS satellites in a satellite set used for each speed calculation fails to meet both of the condition fb1 and the condition fb2.

A GPS satellite 12a or the like having a low elevation is prone to be influenced by a multi-path, and a measurement error of a frequency (including Doppler effect) of a signal S1 or the like increases. As a result, there is a high possibility that an error of a passing speed of the terminal 20 increases. Thus, the control section 100 makes judgment as described above.

In addition, as for PDOP,the control section 100 evaluates as "A" in the case where PDOP meets a condition fd1 that the PDOP in a satellite set used for each speed calculation is less than 1.5.

The control section 100 evaluates as "B" in the case where PDOP meets a condition fd2 that the PDOP in a satellite set used for each speed calculation is 1.5 or more and less than 3.0.

In addition, the control section 100 evaluates as "C" in the case where the PDOP in a satellite set used for each speed calculation meets neither of the condition fd1 and the condition fd2.

In a set of GPS satellites 12a or the like which are poorly allocated, there is a high possibility that an error of a passing speed of the terminal 20 increases. Thus, the control section 100 makes judgment as described above.

In addition, as for acceleration,the control section 100 evaluates as "A" in the case where acceleration meets a condition fe1 that it is less than 1 m/s²

The control section 100 evaluates as "B" in the case where acceleration meets a condition fe2 that it is 1 m/s² or more and less than 15 m/s².

In addition, the control section 100 evaluates as "C" in the case where acceleration meets neither of the condition fe1 and the condition fe2.

As acceleration (speed difference from the previous speed) increases, there is a high possibility that an error of a passing speed of the terminal 20 increases. Thus, the control section 100 makes judgment as described above.

Having evaluated as any one of "A," "B," and "C" with respect to the elapsed time or the like, as described above, the control section 100 comprehensively evaluates each element such as elapsed time dt, and determines reliability R(n) of speed vector information 160 as shown in FIG. 4B.

Specifically, as shown in FIG. 4B, if a condition j1 that five evaluations of "A" exist is met, the reliability R (n) of speed vector information 160 is determined to be "High" (hereinafter, referred to as "H").

In addition, if a condition j2 that three or more evaluations of "C" exist is met, the reliability of speed vector information 160 is determined to be "Low" (hereinafter, referred to as "L").

Then, in the case where neither of the conditions J1 and J2 is met, the reliability is determined to be "Middle (hereinafter, referred to as "M").

With respect to the reliability R(n), H denotes the highest reliability, M denotes the second highest reliability, and L denotes the lowest reliability.

As described above, the control section 100 comprehensively evaluates each element such as elapsed time dt or the like. In this manner, for example, even if the elapsed time dt is evaluated to be A, if signal strength is low, and is evaluated to be C, it is possible to prevent incorrect comprehensive evaluation of H. That is, each evaluation of the above-described elapsed time dt or the like has a function of mutually checking validity.

Unlike the present embodiment, if elapsed time information 162a is evaluated to be C, reliability may be determined to be L without referring to signal strength 162b or the like. In this manner, speed reliability information 164 can be generated promptly.

As shown in FIG. 3, the terminal 20 stores a speed vector correcting purpose gain deciding program 122 in the first storage section 110. The speed vector correcting purpose gain deciding program 122 is a program for the control section 100 to generate speed vector correcting purpose gain information 168 based on reliability R (n-1) indicated in the previous speed reliability information 156 and reliability R(n) of the speed vector information 160.

FIG. 5 is an illustrative diagram illustrating a speed vector correcting purpose gain deciding program 122.

A gain α is specified by 2ⁿ. Its minimum value is 1 (2⁰), and its maximum value is 64 (2⁶). As a value of α decreases, the terminal 20 increases a proportion of the current speed vector V(n) more significantly than the previous speed vector Vf(n-1), and generates corrected speed vector information 170 described later by speed vector correcting program 124 described later.

As shown in FIG. 5, the control section 100 determines a gain α based on reliability R (n-1) of the previous speed vector V (n-1) and reliability R(n) of the current speed vector V (n) . For example, if the previous reliability R(n-1) is H and the current reliability is R(n), the gain α is determined to be 1. In this manner, in the case where the previous and current reliabilities are high, the terminal 20 can generate the corrected speed vector information 170 while increasing a proportion of the speed vector information 160 that is new information reflecting a current passing state.

In addition, if the previous reliability R(n-1) is H and the current reliability R(n) is M, the control section 100 determines the gain α to be 16. In this manner, in the case where the reliability of the previous vector V(n-1) is H and the reliability R(n) of the speed vector information 160 is M, the control section 100 can generate the corrected speed vector information 170 while slightly increasing a proportion of the speed vector information 160 that is new information.

In addition, if the previous reliability R(n-1) is H and the current reliability R(n) is L, the control section 100 determines the gain α to be 32. In this manner, in the case where the previous reliability R(n-1) is H and the current reliability R (n) is L, the terminal 20 can generate the corrected speed vector information 170 while reducing a proportion of the speed vector information 160.

In addition, if the previous reliability R(n-1) is L and the current reliability R(n) is H, the control section 100 determines the gain α to be 1. In this manner, in the case where the previous reliability R(n-1) is L and the current reliability R(n) is H, the terminal 20 can generate the corrected speed vector information 170 while increasing a proportion of the speed vector information 160.

In addition, if the previous reliability R(n-1) is L and the current reliability R(n) is M, the control section 100 determines the gain α to be 2. In this manner, in the case where the previous reliability R(n-1) is L and the current reliability R (n) is M, the terminal 20 can generate the corrected speed vector information 170 while slightly increasing a proportion of the speed vector information 160.

In addition, if the previous reliability R(n-1) is L and the current reliability R(n) is L, the control section 100 determines the gain α to be 64. In this manner, in the case where the previous reliability R(n-1) is L and the current reliability R (n) is L, the terminal 20 can generate the corrected speed vector information 170 while increasing the proportion of the previous speed vector information 154 generated as a result of corrections being repeated by a speed vector correcting program 124 described later.

As shown in FIG. 3, the terminal 20 stores the speed vector correcting program 124 in the first storage section 110. The speed vector correcting program 124 is a program for the control section 100 to generate the corrected speed vector information 170 based on the previous speed vector information 154, the speed vector information 160, and the speed vector correcting purpose gain information 168.

Specifically, the control section 100 calculates a corrected speed vector Vf (n) in accordance with Formula 1, i.e., Vf(n) = Vf(n-1) + {V(n) - Vf(n-1)} / α, shown in FIG. 3.

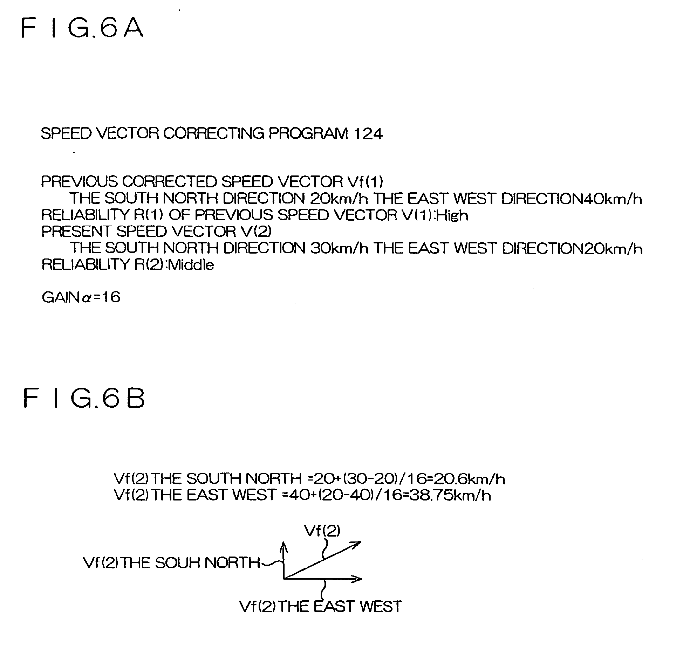

FIG.6A and6B are illustrative diagrams illustrating the speed vector correcting program 124.

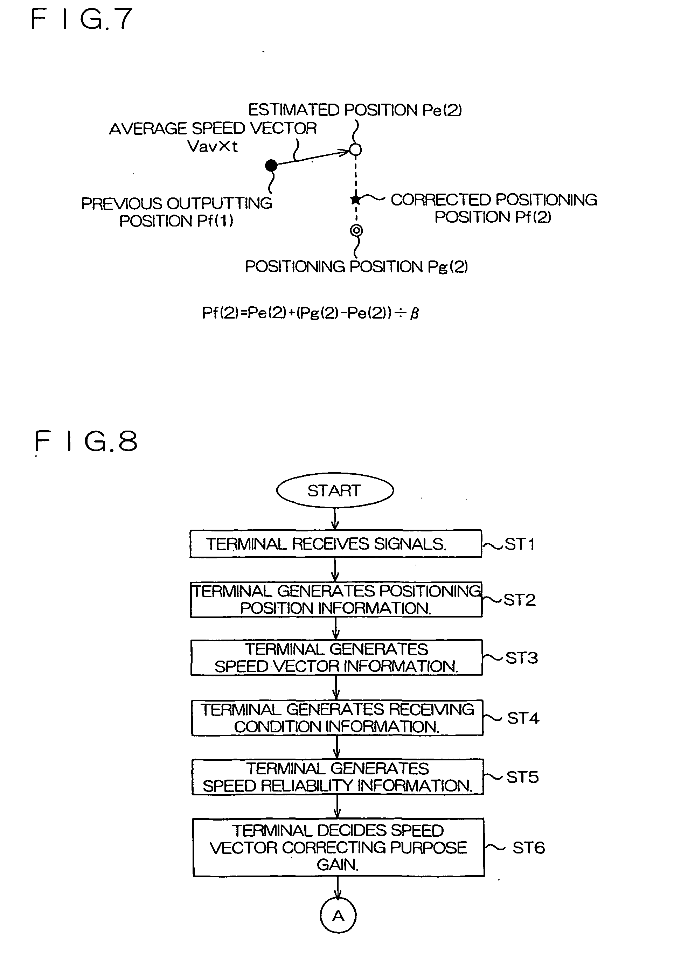

In FIG. 6A, for example, a description is given assuming that the previous speed vector V(n-1) is V(1) and the current speed vector V (n) is V (2). This assumption also applies to FIG. 7 described later.

As shown in FIG. 6A, it is assumed that the speed and direction indicated by a previous corrected speed vector Vf(1) is 20 kilometers per hour (km/h) in a south-north direction and 40 kilometers per hour (km/h) in a east-west direction; and that reliability R(1) of the previous speed vector V(1) is H. Then, it is assumed that the speed and direction indicated by the current speed vector V(2) is 30 kilometers per hour (km/h) in the south-north direction and is 20 kilometers per hour (km/h) in the east-west direction, and reliability R(2) is M.

In this case, the control section 100 determines a gain α to be 16 in accordance with the speed vector correcting purpose gain deciding program 122.

The control section 100 carries out calculation in accordance with Formula 1 shown in FIG. 3 with respect to a respective one of the south-north direction and the east-west direction, as shown in FIG. 6B, and calculates Vf (2) south-north and Vf(2) east-west. Then, the control section 100 combines Vf(2) south-north and Vf(2) east-west with each other, and generates Vf(2).

The control section 100 stores the generated corrected speed vector information 170 in the second storage section 150.

The above-described speed vector correcting purpose gain deciding program 122, speed vector correcting program 124 and control section 100 are, as a whole, an example of corrected speed vector information generating means.

As shown in FIG. 3, the terminal 20 stores an average speed vector information generating program 126 in the first storage section 110. The average speed vector information generating program 126 is a program for averaging the previous speed vector information 154 and the corrected speed vector information 170 and generating average speed vector information 172 indicating an average speed vector Vav. This average speed vector information 172 is an example of average speed vector information.

Specifically, the control section 100, as shown in FIG. 3, calculates an average speed vector Vav in accordance with Formula 2, i.e., Vav = {Vf (n-1) + Vf(n)} / 2.

The control section 100 stores the generated average speed vector information 172 in the second storage section 150.

As shown in FIG. 3, the terminal 20 stores an estimated position information generating program 128 in the first storage section 110. The estimated position information generating program 128 is a program for the control section 100 to generate estimated position information 174 indicating an estimated position Pe (n) of the terminal 20, based on the previous position information 152 and the average speed vector information 172. The previous position information 152 is an example of the previously output current position information. In addition, the estimated position information generating program 128 and the control section 100 are, as a whole, an example of estimated position information generating means.

The control section 100 calculates an estimated position Pe (n) in accordance with Formula 3 (refer to FIG. 3), i.e., Pe(n) = Pf(n-1) + Vav × t.

FIG. 7 is a diagram showing an estimated position or the like.

For example, the control section 100, as shown in FIG. 7, extends an average speed vector Vav to be associated with an elapsed time t from a time when the previous output position Pf (1) is calculated to a current time with the previous output position Pf (1) being a reference point, and calculates an estimated position Pe(2).

The control section 100 stores the generated estimatedposition information 174 in the second storage section 150.

As shown in FIG. 3, the terminal 20 stores a positioning position information correcting purpose gain deciding program 130 in the first storage section 110. The positioning position information correcting purpose gain deciding program 130 is a program for the control section 100 to generate positioning position information correcting purpose gain information 176 indicating a gain β for performing the weighted average processing on the estimated position information 174 and the positioning position information 158.

The control section 100 determines the gain β depending on reliability of the positioning position information 158. For example, the positioning position information 158 and the speed vector information 160 are generated at a substantially same time, and thus, a receiving condition such as a signal S1 obtained when the speed vector information 160 was generated is substituted as a receiving condition obtained when the positioning position information 158 was generated. In addition, when receiving condition information 162 in the current position calculating processing indicates a comprehensively good numeric value by comparing the receiving condition information 162 in the previous position calculating processing and receiving condition information 162 in the current position calculating processing, the gain β is reduced in order to increase a proportion of the current positioning position information 158.

The control section 100 stores the generated positioning position information correcting purpose gain information 176 in the second storage section 150.

Unlike the present embodiment, the control section 100 may determine the gain β in accordance with a method (refer to FIG. 4(c)) which is similar to the above-described speed vector correcting purpose gain deciding program 122.

As shown in FIG. 3, the terminal 20 stores a positioning position information correcting program 132 in the first storage section 110. The positioning position information correcting program 132 is a program for the control section 100 to generate corrected positioning position information 178 indicating a corrected positioning position Pf(n) by performing the weighted average processing on the estimated position information 174 and the positioning position information 158.

Specifically, the control section 100 calculates a corrected positioning position Pf (n) in accordance with Formula 4, i.e., Pf(n) = Pe (n) + {Pg(n) - Pe(n)} / β, as shown in FIG. 3, for example, by using the above-described gain β.

In this manner, for example, as shown in FIG. 7, the control section 100 determines a corrected positioning position Pf(2) at one of the positions between an estimated position Pe(2) and a positioning position Pg(2) in accordance with the gain β.

The control section 100 stores the generated corrected positioning position information 178 in the second storage section 150.

As shown in FIG. 3, the terminal 20 store a corrected positioning position information outputting program 134 in the first storage section 110. The corrected positioning position information outputting program 134 is a program for the control section 100 to output the corrected positioning position information 178 to a display device 32 (refer to FIG. 2).

In addition, as shown in FIG. 3, the terminal 20 stores a basic information update program 136 in the first storage section 110. The basic information update program 136 is a program for the control section 100 to update the corrected positioning position information 178 as new previous position information 152; update the corrected speed vector information 170 as new previous speed vector information 154; and update speed reliability information 164 as new previous speed reliability information 156.

The terminal 20 is configured as described above.

As described above, the terminal 20 can generate receiving condition information 162 (refer to FIG. 3). In addition, the terminal 20 can generate speed reliability information 164 based on the receiving condition information 162. In the case where a receiving condition indicated in the receiving condition information 162 is worse than a predetermined criterion value, the terminal 20 can generate the speed reliability information 164 indicating that the reliability of the speed vector information 160 is low.

Then, the terminal 20 can generate the corrected speed vector information 170 by correcting the speed vector information 160 in the current position calculating processing, based on the speed reliability information 164 or the like. For example, in the case where the reliability R(n) indicated in the speed reliability information 164 is low, the terminal 20 can generate the corrected speed vector information 170 by reducing a proportion of the current speed vector information 160. This corrected speed vector information 170 reduces a proportion of the current speed vector information 164 with low reliability, and thus, reflects a true passing state of the terminal 20 more correctly, as compared with the uncorrected speed vector information 160.

In addition, the terminal 20 can generate average speed vector information 172 by using the corrected speed vector information 170. Thus, the terminal 20 can improve precision of the average speed vector Vav.

The terminal 20 can generate the estimated position information 174 based on this average speed vector information 172 with high precision.

In this manner, the terminal 20 can calculate an estimated Pe(n) with high precision.

As a result, the terminal 20 can improve the precision of a corrected positioning position Pf(n).

In addition, as described above, the receiving condition information 162 (refer to FIG. 3) includes elapsed time information 162a.

As an elapsed time dt is longer, it is considered that the terminal 20 generated speed vector information 160 based on an old signal S1 or the like. In addition, it is assumed that a passing state of the terminal 20 indicated in the speed vector information 160 generated based on the old signal S1 or the like deviates from a true state of the terminal 20.

In this regard, the receiving condition information 162 includes the elapsed time information 162. Thus, in the case where the elapsed time dt is longer than a reference time period, for example, the terminal 20 can generate the corrected speed vector information 170 while lowering the reliability of the speed vector information 160 and reducing the weight of the speed vector information 160.

Thus, the corrected speed vector information 170 reflects a true state of the terminal 20 more correctly.

In this manner, even in the case where the elapsed time dt is long, the estimated Pe(n) can be calculated with high precision.

In addition, the receiving condition information 162 includes signal strength information 162b.

It is considered that a passing state of the terminal 20 indicated in speed vector information 160 generated based on a signal S1 or the like having weak signal strength deviates from a true passing state of the terminal 20.

In this regard, the receiving condition information 162 includes the signal strength information 162b indicating receiving strength of a signal S1 or the like used to generate the speed vector information 160. Thus, for example, in the case where signal strength is weaker than a criterion value, the terminal 20 can generate the speed reliability information 164 indicating that the reliability of the speed vector information 160 is low.

Then, the terminal 20 can generate corrected speed vector information 170 while reducing the weight of the speed vector information 160.

Thus, the corrected speed vector information 170 reflects a true passing state of the terminal 20 more correctly.

In this manner, even in the case where signal strength is weak, an estimated position Pe(n) can be calculated with high precision.

In addition, the receiving condition information 162 includes elevation information 162c and PDOP information 162d. It is considered that a passing state of the terminal 20 indicated in the speed vector information 160 generated based on a signal S1 or the like from a GPS satellite 12a or the like having a small elevation or a signal S1 or the like from a set of GPS satellites 12a having large PDOP deviates from a true passing state of the terminal 20.

In this regard, the receiving condition information 162 includes the elevation information 162c and the PDOP information 162d. Thus, for example, in the case where an elevation is lower than a criterion value or in the case where PDOP is greater than a criterion value, the terminal 20 can generate the speed reliability information 164 indicating that the reliability of the speed vector information 160 is low.

Then, the terminal 20 can generate corrected speed vector information 170 while reducing the weight of the speed vector information 160.

Thus, the corrected speed vector information 170 reflects a true passing state of the terminal 20 more correctly.

In this manner, even in the case where an elevation is small or in the case where PDOP is great, an estimated position Pe(n) can be calculated with high precision.

In addition, the receiving condition information 162 includes acceleration information 162e.

As acceleration is greater, there is a possibility that the currently calculated speed is incorrect. Thus, it is considered that, as acceleration is greater, a passing state of the terminal 20 indicated in speed vector information 160 deviates from a true passing state of the terminal 20.

In this regard, the receiving condition information 162 includes the acceleration information 162e. Thus, for example, in the case where acceleration is greater than a criterion value, the terminal 20 can generate the speed reliability information 164 indicating that the reliability of the speed vector information 160 is low.

Then, the terminal 20 can generate corrected speed vector information 170 while reducing the weight of the speed vector information 160.

Thus, the corrected speed vector information 170 reflects a true passing state of the terminal 20 more correctly.

In this manner, even in the case where acceleration is great, an estimated position Pe(n) can be calculated with high precision.

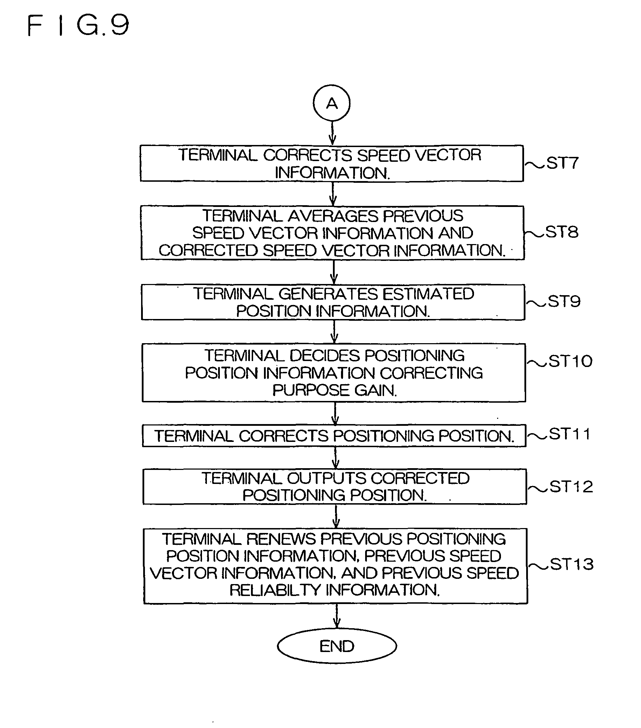

A description of the configuration of the terminal 20 according to the present embodiment has now been completed. Hereinafter, an example of an operation will be described with reference mainly to FIGS. 8 and 9.

FIGS. 8 and 9 are flow charts each showing an example of an operation of the terminal 20 according to the present embodiment.

First, the terminal 20 receives a signal S1 or the like from a GPS satellite 12a or the like (step ST1 of FIG. 8) . This step ST1 is an example of a step of receiving satellite signals.

Then, the terminal 20 generates positioning position information 158 (refer to FIG. 3) (step ST2). This step ST2 is an example of a step of generating a positioning position information.

Then, the terminal 20 generates speed vector information 160 (refer to FIG. 3) (step ST3). This step ST3 is an example of a step of generating a speed vector information.

Then, the terminal 20 generates receiving condition information 162 (refer to FIG. 3) (step ST4). This step ST4 is an example of a step of generating receiving condition information.

Then, the terminal 20 generates speed reliability information 164 (refer to FIG. 3) (step ST5). This step ST5 is an example of a step of generating speed vector reliability information.

Then, the terminal 20 determines a speed vector correcting purpose gain α based on the previous speed reliability information 156 and the speed reliability information 164 (step ST6).

Then, the terminal 20 corrects the speed vector information 160 and generates corrected speed vector information 170 (step ST7 of FIG. 9).

The above-described steps ST6 and ST7 are, as a whole, an example of a step of generating corrected speed vector information.

Then, the terminal 20 generates average speed vector information 172 (refer to FIG. 3) by averaging the previous speed vector information 154 and the corrected speed vector information 170 (step ST8). This step ST8 is an example of a step of generating average speed vector information.

Then, the terminal 20 generates estimated position information 174 (refer to FIG. 3) (step ST9). This step ST9 is an example of a step of generating estimated position information.

Then, the terminal 20 determines a positioning position correcting purpose gain β, and generates positioning position information correcting purpose gain information 176 (step ST10).

Then, the terminal 20 corrects positioning position information 158 (refer to FIG. 3), and generates corrected positioning position information 178 (refer to FIG. 3) (step ST11).

The above-described step ST10 and step ST11 are, as a whole, an example of a step of generating current position information.

Then, the terminal 20 outputs the corrected positioning position information 178 to the display device 32 (refer to FIG. 2) (step ST12).

Then, the terminal 20 updates the previous position information 152, the previous speed vector information 154, and the previous speed reliability information 156 (step ST13) . Specifically, the terminal 20 handles the corrected positioning position information 178 as the previous position information 152; handles the corrected speed vector information 170 as the previous speed vector information 154; and handles the speed reliability information 164 as the previous speed reliability information 156.

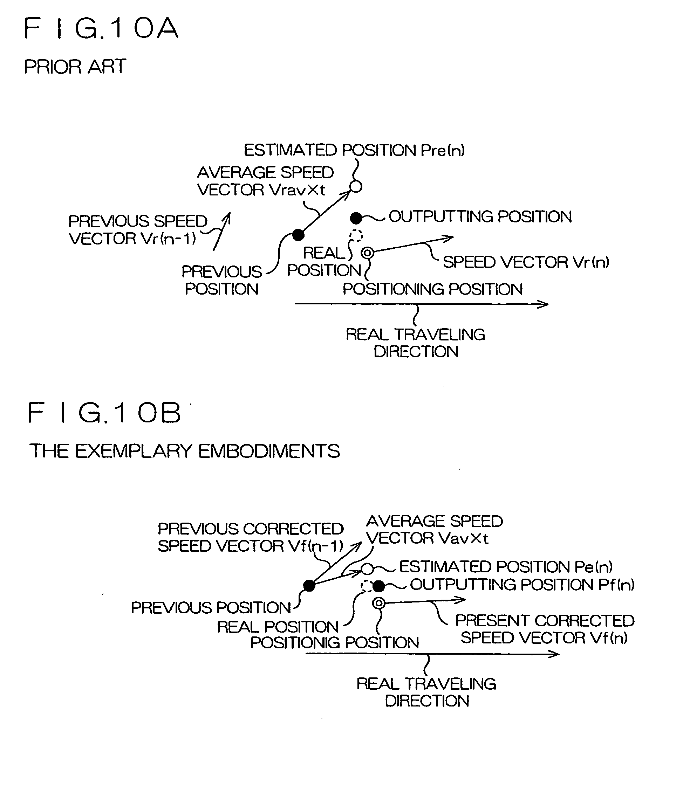

FIG. 10A and 10B are diagrams showing a comparative example between a prior art and a case of generating the corrected positioning position information 178 through the above-described steps.

As shown in FIG. 10A, in the prior art, for example, an estimated position Pre (n) is calculated based on an average speed vector Vrav obtained by averaging a previous speed vector Vr(n-1) and a current speed vector Vr(n) and an elapsed time t from previous positioning.

In contrast, as shown in FIG. 10 B, the terminal 20 generates a corrected speed vector Vf (n) by correcting a current speed vector V(n) without using it as it is (refer to FIG. 3) . Then, the terminal 20 calculates an estimated position Pe(n) based on an average vector Vav obtained by averaging a previous corrected speed vector Vf (n-1) and a current corrected speed vector Vf (n) and an elapsed time t from the previous positioning.

Thus, the estimated position Pe (n) to be calculated by the terminal 20 is more precise than the estimated position Pre(n) calculated in accordance with the prior art.

As a result, the corrected positioning position Pf (n) output from the terminal 20 is more precise than the output position Vr(n) output in accordance with the prior art.

Unlike the present embodiment, the terminal 20 may evaluate elapsed time information 162 or the like that is each of the constituent elements of the above-described receiving condition information 162 using a score based on numeric values of 0 to 100, for example, instead of "A," "B," or "C." In addition, the speed reliability information 164 may also be information indicating a numeric value. In this manner, a comparison between the previous speed reliability information 156 and the speed reliability information 164 can be made in detail, and speed vector correcting purpose gain information 168 can be generated more properly.

### Second Embodiment

Now, a second embodiment will be described here. Most of the configuration of a terminal 20A according to the second embodiment is identical with that of the above terminal 20 according to the first embodiment. Thus, these common elements are designated by like reference numerals. A duplicate description is not provided here. Now, differences therebetween will be mainly described here.

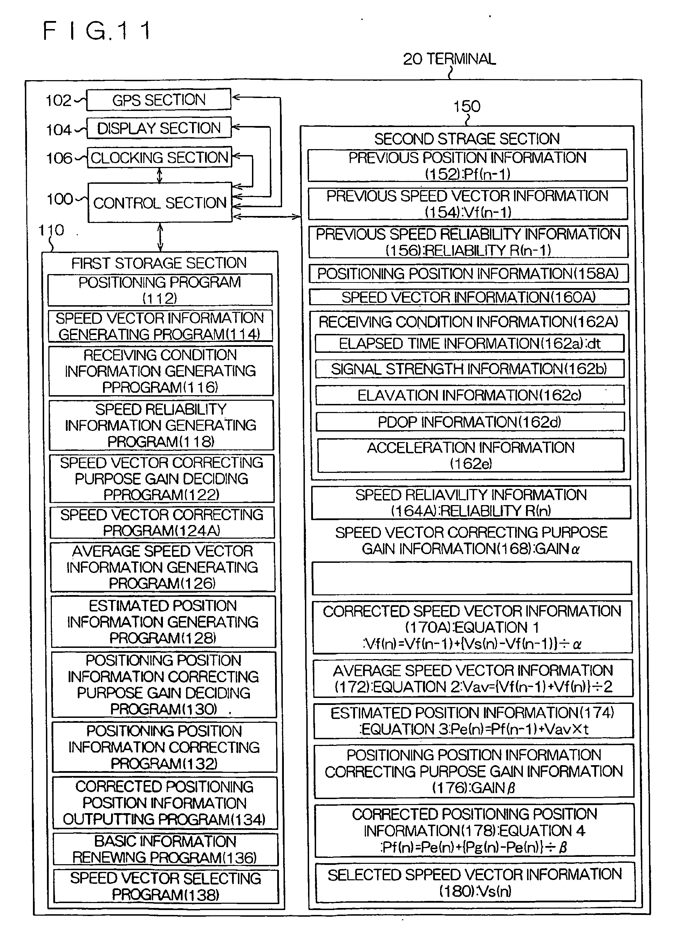

FIG. 11 is a schematic diagram showing a primary software configuration of the terminal 20A.

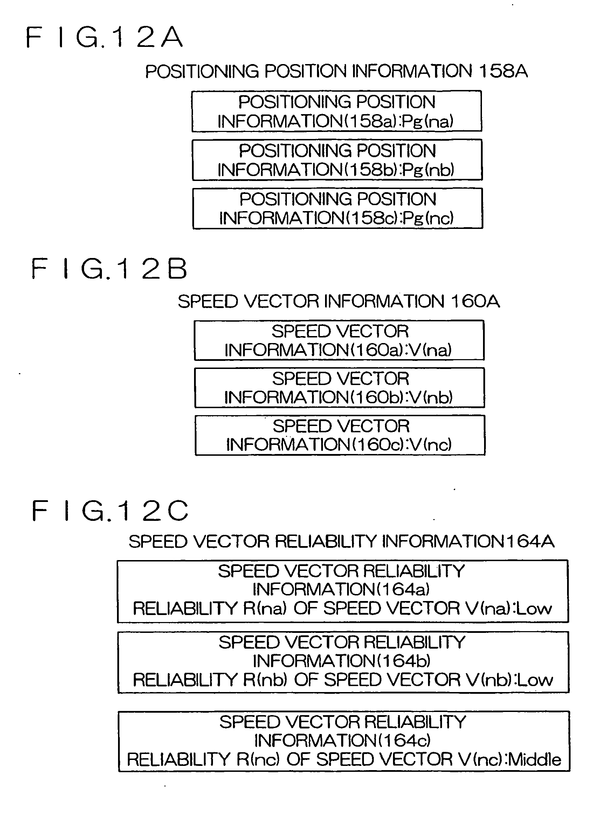

FIG. 12A, 12B and 12C are diagrams showing an example of positioning position information 158A or the like.

The terminal 20A carries out positioning of a plurality of positions in the current positioning, and calculates three positioning positions Pg(na), Pg(nb), and Pg(nc), for example. Then, as shown in FIG. 12A, items of positioning position information 158a, 158b, and 158c are generated, each of which indicates the positioning position Pg(na) or the like.

Thus, as shown in FIG. 12A, positioning position information 158A includes positioning position information 158a or the like.

In addition, the terminal 20A calculates a plurality of speed vectors in association with each positioning position Pg (nc) described above, and calculates three speed vectors V (na), V(nb), and V(nc), for example.

Then, as shown in FIG. 12B, the terminal 20 generates speed vector information 160a, 160b, and 160c indicating the speed vector V(na) or the like, respectively.

Thus, as shown in FIG. 12B, the speed vector information 160A includes the speed vector information 160a or the like.

For example, the speed vector information 160a corresponds to the relevant positioning position information so as to be generated based on a signal S1 or the like used for generating the positioning position information 158a. Similarly, the speed vector information 160b corresponds to positioning position information 158b and the speed vector information 160c corresponds to the positioning position information 158c.

For example, the speed vector V (na) is a speed vector calculated based on signals S1, S2, S3, and S4 from GPS satellites 12a, 12b, 12c, and 12d. The speed vector V (nb) is a speed vector calculated based on signals S3, S4, S5, and S6 fromGPS satellites 12c, 12d, 12e, and 12f . The speed vector V (nc) is a speed vector calculatedbased on signals S5, S6, S7, and S8 from GPS satellites 12e, 12f, 12g, and 12h.

In this way, if combinations of the GPS satellites 12a or the like used for calculation are different from each other, speed vectors obtained as the calculation results may be different from each other as well.

The control section 100 of the terminal 20A is configured to generate receiving condition information 162A (refer to FIG. 11), each of which corresponds to each item of the above described speed vector information 160a or the like, in accordance with a receiving condition information generating program 116.

In addition, the terminal 20A, as shown in FIG. 12C, generates speed reliability information 164a or the like that corresponds to a respective one of a plurality of the above-described speed vectors.

Thus, speed reliability information 164A includes speed reliability information 164a or the like.

For example, reliabilityR(na) of a speed vector V (na) is L; reliability R (nb) of a speed vector V(nb) is L; and reliability R(nc) of a speed vector V(nc) is M.

As shown in FIG. 11, the terminal 20 stores a speed vector selecting program 138 in a first storage section 110. The speed vector selecting program 138 is a program for the control section 100 to select one of speed vectors V(na) or the like, based on the speed reliability information 164A. That is, the speed vector selecting program 138 and the control section 100 are, as a whole, an example of speed vector information selecting means.

Specifically, the control section 100 selects a speed vector having the highest reliability R indicated in the speed reliability information 164A.

For example, as shown in FIG. 12C, among speed vectors V(na), V nb), and V(nc), the reliability R(nc) of the speed vector V(nc) is M, which is the highest in reliability R. In this case, the control section 100 selects the speed vector V (nc), handles the selected vector as a selected speed vector Vs(n), and generates selected speed vector information 180 indicating this selected speed vector Vs(n). This selected speed vector information 180 is also an example of speed vector information.

The control section 100 stores the generated selected speed vector information 180 in a second storage section 150.

The control section 100 of the terminal 20A corrects the selected speed vector Vs (n) indicated in the above-described selected speed vector information 180 in accordance with a speed vector correcting program 124A so as to generate corrected speed vector information 170A.

As described above, the terminal 20A can select any of speed vector information 160a or the like having relatively high reliability R from a plurality of speed vector information 160a or the like.

In addition, the terminal 20A is configured to generate corrected speed vector information 170A by using selected speed vector information 180 selected from a plurality of speed vector information 160a or the like.

Thus, the terminal 20A can generate the corrected speed vector information 170A based on the selected speed vector information 180 that relatively precisely reflects a true passing state of the terminal 20A.

Thus, the corrected speed vector information 170A reflects the true passing state of the terminal 20A more correctly.

In this manner, the terminal 20A can improve the precision of average speed vector information 172 and calculate an estimated position Pe(n) more precisely.

Then, the precision of the estimated position Pe (n) is improved, and thus, the precision of a corrected positioning position Pf(n) is also improved more remarkably.

Program and Computer Readable Recording Medium or the like

A terminal device control program can be provided for causing a computer to execute the steps of: receiving satellite signals; generating positioning position information; generating speed vector information; generating receiving condition information; generating speed vector reliability information; generating corrected speed vector information; generating average speed vector information; generating estimated position information; generating current position information; and outputting a current position information or the like, according to the above-described example of operation.

In addition, a computer readable recording medium can be provided, the recording medium having recorded therein such a terminal device control program.

Program storage mediums used to install these terminal apparatus control programs or the like in a computer and to establish a computer executable state include: a semiconductor memory, a magnetic disk, or a magneto-optical disk having programs temporarily or permanently stored therein as well as flexible disks such as a floppy disk (registered trademark) and package mediums such as CD-ROM (Compact Disc Read Only Memory), CD-R (Compact Disc-Recordable), CD-RW (Compact Disk-Rewritable), and DVD (Digital Versatile Disc).

The invention is not limited to the above-described respective embodiments. Further, the above-described respective embodiments may be combined with each other.

## Claims

1. A terminal device (20, 20A) for carrying out position calculating processing for generating current position information indicating a current position for outputting by performing weighted average processing on positioning position information (158) generated based on satellite signals (51-58) that are signals from positioning satellites (12a-124) and estimated position information (174) indicating an estimated position, the terminal device comprising:
satellite signal receiving means (30) for receiving the satellite signals;
positioning position information generating means for generating (ST2) the positioning position information (158) indicating a current position of the terminal device, based on the satellite signals;
speed vector information generating means for generating (ST3) speed vector information (160) indicating a passing direction and a passing speed of the terminal device, based on the satellite signals;
receiving condition information generating means for generating (ST4) receiving condition information (162) indicating a receiving condition of the satellite signals obtained when the speed vector information was generated;
speed vector reliability information generating means for generating (ST5) speed vector reliability information (164) indicating reliability of the speed vector information, based on the receiving condition information;
corrected speed vector information generating means for correcting the speed vector information and generating (ST7) corrected speed vector information (170), based on the speed vector reliability information;
average speed vector information generating means for generating (ST8) average speed vector information (172) by averaging the current corrected speed vector information and the corrected speed vector information in the previous position calculating processing;
estimated position information generating means for generating (ST9) the estimated position information (174) indicating an estimated position of the terminal device, based on the average speed vector information and the current position information output in the previous position calculating processing;
current position information generating means for generating (ST10, ST11) the current position information by performing the weighted average processing on the estimated position information (174) and the positioning position information (158); and
current position information output means for outputting (ST12) the current position information.

2. A terminal device as claimed in claim 1, wherein the corrected speed vector information generating means is configured to correct the speed vector information in the current position calculating processing, and generate the corrected speed vector information, based on the speed vector reliability information (164), previous speed vector reliability information (156) indicating reliability of the speed vector obtained when the previous position calculating processing was carried out, and the corrected speed vector information (170) obtained when the previous position calculating processing was carried out.

3. A terminal device as claimed in claim 1 or claim 2,
wherein the speed vector information generating means is configured to generate a plurality of the speed vector information (160), based on the satellite signals (S1-S8) from a set of the positioning satellites which are different from each other and has speed vector information selecting means for selecting one of the speed vector information, based on the speed vector reliability information; and wherein the corrected speed vector information generating means is configured to generate the corrected speed vector information by using the speed vector information selected by the speed vector information selecting means.

4. A terminal device of any claims 1 through 3, wherein the receiving condition information (162) includes elapsed time information (162a) indicating an elapsed time required for the satellite signal receiving means to receive the satellite signals, and then, generate the speed vector information.

5. A terminal device of any claims 1 through 4, wherein the receiving condition information (162) includes signal strength information (162b) indicating signal strength obtained when the satellite signals used to generate the speed vector information were received.

6. A terminal device of any claims 1 through 5, wherein the receiving condition information (162) includes elevation information (162c) indicating an elevation of the positioning satellites that transmitted the satellite signals used to generate the speed vector information and PDOP information indicating PDOP, that is Position Dilution Of Precision, of a set of the positioning satellites that transmitted the satellite signals used to generate the speed vector information.

7. A terminal device control method comprising the steps of:
receiving (ST1) satellite signals by means of a terminal device (20, 20A) which carries out position calculating processing for generating current position information indicating a current position for outputting by performing weighted average processing on positioning position information (158) generated based on the satellite signals (S1-S8) that are signals from positioning satellites (12a-12b) and estimated position information indicating an estimated position;
generating (ST2) the positioning position information (158) indicating a current position of the terminal device based on the satellite signals by means of the terminal device;
generating (ST3) speed vector information (160) indicating a passing direction and a passing speed of the terminal device, based on the satellite signals by means of the terminal device;
generating (ST4) receiving condition information (162) indicating a receiving condition of the satellite signals obtained when the speed vector information (160) was generated, by means of the terminal device;
generating (ST5) speed vector reliability information indicating reliability of the speed vector information (164), based on the receiving condition information (162), by means of the terminal device;
generating (ST7) corrected speed vector information (170) by correcting the speed vector information, based on the speed vector reliability information, by means of the terminal device;
generating (ST8) average speed vector information (172) by averaging the current corrected speed vector information and the corrected speed vector information in the previous position calculating processing by means of the terminal device;
generating (ST9) the estimated position information (174) indicating an estimated position of the terminal device, based on the average speed vector information (172) and the current position information output in the previous position calculating processing, by means of the terminal device;
generating (ST10, ST11) the current position information by performing the weighted average processing on the estimated position information (174) and the positioning position information (158) by means of the terminal device; and
outputting (ST12) the current position information by means of the terminal device.

8. A terminal device control program causing a computer to execute the steps of the method as claimed in claim 7.

## Patentansprüche

1. Endgerät (20, 20a) zum Vornehmen von Positionsberechnungsverarbeitung zum Erzeugen aktueller Positionsangaben, die eine aktuelle Position zum Ausgeben angeben, durch Durchführen von Verarbeitung gewichteter Mittelwerte von Positionsbestimmungs-Positionsangaben (158), die basierend auf Satellitensignalen (S1-S8), die Signale von Positionsbestimmungssatelliten (12a-12h) sind, und geschätzten Positionsangaben (174) erzeugt worden sind, die eine geschätzte Position angeben, wobei das Endgerät Folgendes umfasst:
Satellitensignalempfangsmittel (30) zum Empfangen der Satellitensignale;
Positionsbestimmungs-Positionsangaben-Erzeugungsmittel zum Erzeugen (ST2) der Positionsbestimmungs-Positionsangaben (158), die eine aktuelle Position des Endgerätes angeben, basierend auf den Satellitensignalen;
Geschwindigkeitsvektorangaben-Erzeugungsmittel zum Erzeugen (ST3) von Geschwindigkeitsvektorangaben (160), die eine Bewegungsrichtung und eine Bewegungsgeschwindigkeit des Endgerätes angeben, basierend auf den Satellitensignalen;
Empfangsbedingungsangaben-Erzeugungsmittel zum Erzeugen (ST4) von Empfangsbedingungsangaben (162), die eine Empfangsbedingung des Satellitensignals angeben, die erlangt worden ist, als die Geschwindigkeitsvektorangaben erzeugt wurden;
Geschwindigkeitsvektor-Zuverlässigkeitsangaben-Erzeugungsmittel zum Erzeugen (ST5) von Geschwindigkeitsvektor-Zuverlässigkeitsangaben (164), die die Zuverlässigkeit der Geschwindigkeitsvektorangaben angeben, basierend auf den Empfangsbedingungsangaben;
Mittel zum Erzeugen korrigierter Geschwindigkeitsvektorangaben zum Korrigieren der Geschwindigkeitsvektorangaben und Erzeugen (ST7) korrigierter Geschwindigkeitsvektorangaben (170) basierend auf den Geschwindigkeitsvektor-Zuverlässigkeitsangaben;
Mittel zum Erzeugen mittlerer Geschwindigkeitsvektorangaben zum Erzeugen (ST8) mittlerer Geschwindigkeitsvektorangaben (172) durch Mitteln der aktuellen korrigierten Geschwindigkeitsvektorangaben und der korrigierten Geschwindigkeitsvektorangaben in der vorherigen Positionsberechnungsverarbeitung;
Mittel zum Erzeugen geschätzter Positionsangaben zum Erzeugen (ST9) der geschätzten Positionsangaben (174), die eine geschätzte Position des Endgerätes angeben, basierend auf den mittleren Geschwindigkeitsvektorangaben und den aktuellen Positionsangaben, die in der vorherigen Positionsberechnungsverarbeitung ausgegeben worden sind;
Mittel zum Erzeugen aktueller Positionsangaben zum Erzeugen (ST10, ST11) der aktuellen Positionsangaben durch Durchführen der Verarbeitung gewichteter Mittelwerte der geschätzten Positionsangaben (174) und der Positionsbestimmungs-Positionsangaben (158) und
Mittel zum Ausgeben aktueller Positionsangaben zum Ausgeben (ST12) der aktuellen Positionsangaben.

2. Endgerät nach Anspruch 1, wobei die Mittel zum Erzeugen korrigierter Geschwindigkeitsvektorangaben konfiguriert sind, die Geschwindigkeitsvektorangaben in der Berechnungsverarbeitung aktueller Positionen zu korrigieren und die korrigierten Geschwindigkeitsvektorangaben basierend auf den Geschwindigkeitsvektor-Zuverlässigkeitsangaben (164), den vorherigen Geschwindigkeitsvektor-Zuverlässigkeitsangaben (156), die die Zuverlässigkeit des Geschwindigkeitsvektors angeben, die erlangt worden sind, als die vorherige Positionsberechnungsverarbeitung vorgenommen wurde, und den korrigierten Geschwindigkeitsvektorangaben (170) zu erzeugen, die erlangt worden sind, als die vorherige Positionsberechnungsverarbeitung vorgenommen wurde.

3. Endgerät nach Anspruch 1 oder Anspruch 2, wobei die Geschwindigkeitsvektorangaben-Erzeugungsmittel konfiguriert sind, mehrere der Geschwindigkeitsvektorangaben (160) basierend auf den Satellitensignalen (S1-S8) von einem Satz der Positionsbestimmungssatelliten zu erzeugen, die voneinander verschieden sind, und Geschwindigkeitsvektorangaben-Auswählmittel zum Auswählen einer der Geschwindigkeitsvektorangaben basierend auf den Geschwindigkeitsvektor-Zuverlässigkeitsangaben aufweisen; und wobei die Mittel zum Erzeugen korrigierter Geschwindigkeitsvektorangaben konfiguriert sind, die korrigierten Geschwindigkeitsvektorangaben durch Verwenden der Geschwindigkeitsvektorangaben zu erzeugen, die durch die Geschwindigkeitsvektorangaben-Auswählmittel ausgewählt worden sind.

4. Endgerät nach jedweden Ansprüchen 1 bis 3, wobei die Empfangsbedingungsangaben (162) Ablaufzeitangaben (162a) beinhalten, die eine Ablaufzeit angeben, die für das Satellitensignalempfangsmittel benötigt wird, um die Satellitensignale zu empfangen und dann die Geschwindigkeitsvektorangaben zu erzeugen.

5. Endgerät nach jedweden Ansprüchen 1 bis 4, wobei die Empfangsbedingungsangaben (162) Signalstärkenangaben (162b) beinhalten, die Signalstärke angeben, die erlangt worden ist, als die Satellitensignale empfangen wurden, die verwendet worden sind, um die Geschwindigkeitsvektorangaben zu erzeugen.

6. Endgerät nach jedweden Ansprüchen 1 bis 5, wobei die Empfangsbedingungsangaben (162) Elevationsangaben (162c), die eine Elevation der Positionsbestimmungssatelliten angeben, die die Satellitensignale sendeten, die verwendet worden sind, um die Geschwindigkeitsvektorangaben zu erzeugen, und PDOP-Angaben beinhalten, die PDOP, das heißt Verringerung der Positionsgenauigkeit, eines Satzes der Positionsbestimmungssatelliten angeben, die die Satellitensignale sendeten, die verwendet worden sind, um die Geschwindigkeitsvektorangaben zu erzeugen.

7. Endgerätesteuerverfahren, das die folgenden Schritte umfasst:
Empfangen (ST1) von Satellitensignalen mittels eines Endgerätes (20, 20a), das
Positionsberechnungsverarbeitung zum Erzeugen aktueller Positionsangaben, die eine aktuelle Position zum Ausgeben angeben, durch Durchführen von Verarbeitung gewichteter Mittelwerte von Positionsbestimmungs-Positionsangaben (158) vornimmt, die basierend auf den Satellitensignalen (S1-S8), die Signale von Positionsbestimmungssatelliten (12a-12h) sind, und geschätzten Positionsangaben erzeugt worden sind, die eine geschätzte Position angeben;
Erzeugen (ST2) der Positionsbestimmungs-Positionsangaben (158), die eine aktuelle Position des Endgerätes angeben, basierend auf den Satellitensignalen mittels des Endgerätes;
Erzeugen (ST3) von Geschwindigkeitsvektorangaben (160), die eine Bewegungsrichtung und eine Bewegungsgeschwindigkeit des Endgerätes angeben, basierend auf den Satellitensignalen mittels des Endgerätes;
Erzeugen (ST4) von Empfangsbedingungsangaben (162), die eine Empfangsbedingung des Satellitensignals angeben, die erlangt worden ist, als die Geschwindigkeitsvektorangaben (160) erzeugt wurden, mittels des Endgerätes;
Erzeugen (ST5) von Geschwindigkeitsvektor-Zuverlässigkeitsangaben, die Zuverlässigkeit der Geschwindigkeitsvektorangaben (164) angeben, basierend auf den Empfangsbedingungsangaben (162) mittels des Endgerätes;
Erzeugen (ST7) korrigierter Geschwindigkeitsvektorangaben (170) durch Korrigieren der Geschwindigkeitsvektorangaben basierend auf den Geschwindigkeitsvektor-Zuverlässigkeitsangaben mittels des Endgerätes;
Erzeugen (ST8) mittlerer Geschwindigkeitsvektorangaben (172) durch Mitteln der aktuellen korrigierten Geschwindigkeitsvektorangaben und der korrigierten Geschwindigkeitsvektorangaben in der vorherigen Positionsberechnungsverarbeitung mittels des Endgerätes;
Erzeugen (ST9) der geschätzten Positionsangaben (174), die eine geschätzte Position des Endgerätes angeben, basierend auf den mittleren Geschwindigkeitsvektorangaben (172) und den aktuellen Positionsangaben, die in der vorherigen Positionsberechnungsverarbeitung ausgegeben worden sind, mittels des Endgerätes;
Erzeugen (ST10, ST11) der aktuellen Positionsangaben durch Durchführen der Verarbeitung gewichteter Mittelwerte der geschätzten Positionsangaben (174) und der Positionsbestimmungs-Positionsangaben (158) mittels des Endgerätes und
Ausgeben (ST12) der aktuellen Positionsangaben mittels des Endgerätes.

8. Endgerätesteuerprogramm, das einen Computer veranlasst, die Schritte des Verfahrens nach Anspruch 7 auszuführen.

## Revendications

1. Dispositif terminal (20, 20A) destiné à exécuter un traitement de calcul de position pour générer des informations de position actuelle indiquant une position actuelle à délivrer en sortie en effectuant un traitement de moyenne pondérée sur des informations de position de positionnement (158) générées sur la base de signaux satellites (S1-S8) qui sont des signaux provenant de satellites de positionnement (12a-12h) et d'informations de position estimée (174) indiquant une position estimée, le dispositif terminal comprenant :
un moyen (30) de réception de signal satellite destiné à recevoir les signaux satellites ;
un moyen de génération d'informations de position de positionnement destiné à générer (ST2) les informations de position de positionnement (158) indiquant une position actuelle du dispositif terminal, sur la base des signaux satellites ;
un moyen de génération d'informations de vecteur de vitesse destiné à générer (ST3) des informations de vecteur de vitesse (160) indiquant une direction de passage et une vitesse de passage du dispositif terminal, sur la base des signaux satellites ;
un moyen de génération d'informations d'état de réception destiné à générer (ST4) des informations d'état de réception (162) indiquant un état de réception des signaux satellites obtenus lorsque les informations de vecteur de vitesse ont été générées ;
un moyen de génération d'informations de fiabilité de vecteur de vitesse destiné à générer (ST5) des informations de fiabilité de vecteur de vitesse (164) indiquant la fiabilité des informations de vecteur de vitesse, sur la base des informations d'état de réception ;
un moyen de génération d'informations de vecteur de vitesse corrigées destiné à corriger les informations de vecteur de vitesse et à générer (ST7) des informations de vecteur de vitesse corrigées (170), sur la base des informations de fiabilité de vecteur de vitesse ;
un moyen de génération d'informations de vecteur de vitesse moyennes destiné à générer (ST8) des informations de vecteur de vitesse moyennes (172) en faisant la moyenne des informations de vecteur de vitesse corrigées actuelles et des informations de vecteur de vitesse corrigées dans le traitement de calcul de position précédente ;
un moyen de génération d'informations de position estimée destiné à générer (ST9) les informations de position estimée (174) indiquant une position estimée du dispositif terminal, sur la base des informations de vecteur de vitesse moyennes et des informations de position actuelle délivrées en sortie dans le traitement de calcul de position précédente ;
un moyen de génération d'informations de position actuelle destiné à générer (ST10, ST11) les informations de position actuelle en effectuant le traitement de moyenne pondérée sur les informations de position estimée (174) et les informations de position de positionnement (158) ; et
un moyen de sortie d'informations de position actuelle destiné à délivrer en sortie (ST12) les informations de position actuelle.

2. Dispositif terminal tel que revendiqué dans la revendication 1, dans lequel le moyen de génération d'informations de vecteur de vitesse corrigées est configuré pour corriger les informations de vecteur de vitesse dans le traitement de calcul de position actuelle, et pour générer les informations de vecteur de vitesse corrigées, sur la base des informations de fiabilité de vecteur de vitesse (164), des informations de fiabilité de vecteur de vitesse précédent (156) indiquant une fiabilité du vecteur de vitesse obtenu lorsque le traitement de calcul de position précédente a été effectué, et des informations de vecteur de vitesse corrigées (170) obtenues lorsque le traitement de calcul de position précédente a été effectué.

3. Dispositif terminal tel que revendiqué dans la revendication 1 ou 2, dans lequel le moyen de génération d'informations de vecteur de vitesse est configuré pour générer une pluralité d'informations de vecteur de vitesse (160), sur la base des signaux satellites (S1-S8) provenant d'un ensemble des satellites de positionnement qui sont différents les uns des autres et a un moyen de sélection d'informations de vecteur de vitesse destiné à sélectionner l'une des informations de vecteur de vitesse, sur la base des informations de fiabilité de vecteur de vitesse ; et où le moyen de génération d'informations de vecteur de vitesse corrigées est configuré pour générer les informations de vecteur de vitesse corrigées en utilisant les informations de vecteur de vitesse sélectionnées par le moyen de sélection d'informations de vecteur de vitesse.

4. Dispositif terminal de l'une des revendications 1 à 3, dans lequel les informations d'état de réception (162) comportent des informations de temps écoulé (162a) indiquant un temps écoulé nécessaire au moyen de réception de signal satellite pour recevoir les signaux satellites, et ensuite générer les informations de vecteur de vitesse.

5. Dispositif terminal selon l'une des revendications 1 à 4, dans lequel les informations d'état de réception (162) comportent des informations d'intensité de signal (162b) indiquant une intensité de signal obtenue lorsque les signaux satellites utilisés pour générer les informations de vecteur de vitesse ont été reçus.

6. Dispositif terminal de l'une des revendications 1 à 5, dans lequel les informations d'état de réception (162) comportent des informations d'élévation (162c) indiquant une élévation des satellites de positionnement qui ont transmis les signaux satellites utilisés pour générer les informations de vecteur de vitesse et des informations de PDOP indiquant une PDOP, qui est une Dilution de la Précision de Position, d'un ensemble des satellites de positionnement qui ont transmis les signaux satellites utilisés pour générer les informations de vecteur de vitesse.

7. Procédé de commande de dispositif terminal, comprenant les étapes consistant :
à recevoir (ST1) des signaux satellites au moyen d'un dispositif terminal (20, 20A) qui réalise un traitement de calcul de position pour générer des informations de position actuelle indiquant une position actuelle à délivrer en sortie en effectuant un traitement de moyenne pondérée sur des informations de position de positionnement (158) générées sur la base des signaux satellites (S1-S8) qui sont des signaux provenant de satellites de positionnement (12a-12h) et des informations de position estimée indiquant une position estimée ;
à générer (ST2) les informations de position de positionnement (158) indiquant une position actuelle du dispositif terminal sur la base des signaux satellites au moyen du dispositif terminal ;
à générer (ST3) des informations de vecteur de vitesse (160) indiquant une direction de passage et une vitesse de passage du dispositif terminal, sur la base des signaux satellites au moyen du dispositif terminal ;
à générer (ST4) des informations d'état de réception (162) indiquant un état de réception des signaux satellites obtenus lorsque les informations de vecteur de vitesse (160) ont été générées, au moyen du dispositif terminal ;
à générer (ST5) des informations de fiabilité de vecteur de vitesse indiquant une fiabilité des informations de vecteur de vitesse (164), sur la base des informations d'état de réception (162), au moyen du dispositif terminal ;
à générer (ST7) des informations de vecteur de vitesse corrigées (170) en corrigeant les informations de vecteur de vitesse, sur la base des informations de fiabilité de vecteur de vitesse, au moyen du dispositif terminal ;
à générer (ST8) des informations de vecteur de vitesse moyennes (172) en faisant la moyenne des informations de vecteur de vitesse corrigées actuelles et des informations de vecteur de vitesse corrigées dans le traitement de calcul de position précédente au moyen du dispositif terminal ;
à générer (ST9) les informations de position estimée (174) indiquant une position estimée du dispositif terminal, sur la base des informations de vecteur de vitesse moyennes (172) et des informations de position actuelle délivrées en sortie dans le traitement de calcul de position précédente, au moyen du dispositif terminal ;
à générer (ST10, ST11) les informations de position actuelle en effectuant le traitement de moyenne pondérée sur les informations de position estimée (174) et les informations de position de positionnement (158) au moyen du dispositif terminal ; et
à délivrer en sortie (ST12) les informations de position actuelle au moyen du dispositif terminal.

8. Programme de commande de dispositif terminal amenant un ordinateur à exécuter les étapes du procédé tel que revendiqué dans la revendication 7.
